# EUROPÄISCHE PATENTSCHRIFT

(11) **EP 4 387 858 B1**
(45) Veröffentlichungstag und Bekanntmachung des Hinweises auf die Patenterteilung: **18.06.2025**
(21) Anmeldenummer: 22753706.5
(22) Anmeldetag: 21.07.2022
(51) Int. Cl.: B60H 1/34

(54) **LUFTLEITELEMENT FÜR EINE BELÜFTUNGSDÜSE**
AIR-GUIDING ELEMENT FOR A VENTILATION NOZZLE
ÉLÉMENT DE GUIDAGE D'AIR POUR UNE BUSE DE VENTILATION

(30) Priorität: 17.08.2021 DE 102021004197
(43) Veröffentlichungstag der Anmeldung: 26.06.2024
(73) Patentinhaber: Mercedes-Benz Group AG, 70372 Stuttgart (DE)
(72) Erfinder: GERHARDT, Volker, 71101 Schönaich (DE); OHM, Alexander, 71116 Gärtringen (DE); HEINRICH, Felix, 71069 Sindelfingen (DE); WOLF, Harald, 72119 Ammerbuch (DE)
(74) Vertreter: Novagraaf Group
(86) Internationale Anmeldenummer: PCT/EP2022/070527
(87) Internationale Veröffentlichungsnummer: WO 2023/020777

(56) Entgegenhaltungen:
- EP-A1- 3 812 185
- DE-A1- 102015 115 365
- DE-A1- 102016 000 067

## Beschreibung

Die Erfindung betrifft ein Luftleitelement für eine Belüftungsdüse in einem Kraftfahrzeug, nach der im Oberbegriff von Anspruch 1 näher definierten Art. Die Erfindung betrifft außerdem eine Belüftungsdüse für ein Kraftfahrzeug mit einem als Luftleitring ausgebildeten solchen Luftleitelement.

Aus der DE 10 2014 018 302 A1 ist eine Belüftungsvorrichtung bekannt, bei welcher ein Luftleitelement zum Ausleiten des Luftstroms in einem bestimmten Winkel zum Gehäuse der Belüftungsdüse vorgesehen ist. Dabei ist ein Teil dieses Luftleitelements über einen Lichtleiter beleuchtbar. Der Aufbau ist dabei so ausgeführt, dass eine Beweglichkeit zwischen zwei lichtleitenden Elementen vorgesehen ist, was den Aufbau relativ aufwändig in seiner Herstellung und insbesondere relativ fehleranfällig macht.

Die DE 10 2014 015 252 A1 beschreibt eine weitere Belüftungsvorrichtung, bei welcher insbesondere ein Verstellelement für die Luftleitelemente beleuchtbar ausgeführt ist.

Die DE 10 2015 115 365 A1 zeigt einen beleuchteten Luftausströmer für eine Kraftfahrzeug. Dieser umfasst eine punkförmige Lichtquelle, ein Lichtleitelement und eine stabförmiges Einkopplungselement.

Aus der DE 10 2016 000 067 A1 ist außerdem eine Lüftungsdüsenanordnung für das Cockpit eines Fahrzeugs bekannt, welche mehrere Lamellen aufweist, die aus einem lichtdurchlässigen Material hergestellt sind.

Die EP 3 812 185 A1 beschreibt Luftverteiler für Kraftfahrzeuge, mit einem Beleuchtungsmittel zum Beleuchten eines Gehäuses. Die Beleuchtungsmittel umfassen mindestens eine reflektierende Fläche, um das Licht zu reflektieren und zu dem Gehäuse hin umzuleiten.

Zum weiteren Stand der Technik kann außerdem auf die DE 10 2008 047 833 A1 verwiesen werden, welche den Aufbau eines Kunststoffformkörpers beschreibt, welcher zum Teil aus galvanisierbarem Kunststoff und zum Teil aus nicht galvanisierbarem Kunststoff aufgebaut ist, um so gezielt in bestimmten Bereichen eine Oberflächenbeschichtung mittels Galvanisieren zu ermöglichen.

Die Aufgabe der vorliegenden Erfindung besteht nun darin, ein Luftleitelement für eine Belüftungsdüse in einem Fahrzeug anzugeben, welches beleuchtet ausgeführt ist, wobei der Aufbau gegenüber dem Stand der Technik konstruktiv vereinfacht und hinsichtlich der Gestaltungsmöglichkeiten erweitert wird.

Erfindungsgemäß wird diese Aufgabe durch ein Luftleitelement mit den Merkmalen im Anspruch 1, und hier insbesondere im kennzeichnenden Teil des Anspruchs 1 gelöst. Vorteilhafte Ausgestaltungen und Weiterbildungen ergeben sich aus den hiervon abhängigen Unteransprüchen.

Bei dem erfindungsgemäßen Luftleitelement ist es so, dass dieses einen Grundkörper aufweist, welcher die Belüftungsdüse um ihren Umfang herum ganz oder größtenteils umfassen bzw. umschließen kann.

Bei einer im Querschnitt runden Belüftungsdüse, wie dies in der Praxis häufig der Fall ist, wäre dann das Luftleitelement gemäß einer besonders günstigen Ausgestaltung der Erfindung als Luftleitring realisiert. Auf dem Grundkörper sind Luftleitrippen angeordnet und das Luftleitelement ist mit einer Beleuchtungseinrichtung versehen.

Erfindungsgemäß ist es nun so, dass der Grundkörper und die Luftleitrippen und damit das gesamte Luftleitelement mit Ausnahme der Beleuchtungseinrichtung einteilig mittels 3D-Mehrkomponentendruck hergestellt sind. Dies ist außerordentlich einfach und effizient in der Herstellung. Dabei lassen sich verschiedenartige Komponenten zu einem einzigen einteiligen Bauteil zusammenfügen, sodass der Grundkörper des erfindungsgemäßen Luftleitelements einen transparenten Kern aufweist, wobei Teile der Oberfläche des

Grundkörpers und der Luftleitrippen teilweise aus teiltransparentem Material und teilweise aus nicht transparentem Material auf den Kern aus dem transparenten Material aufgedruckt sind. Dieser einteilige in 3D-Mehrkomponentendruck erhältliche Aufbau kann so mit dem transparenten Kern als Lichtleiter realisiert werden. Das Aufdrucken der Oberfläche und/oder der Luftleitrippen bzw. ihrer Oberflächen teilweise aus teiltransparentem und teilweise aus intransparentem Material erlaubt es dann, außerordentlich einfach und effizient das gewünschte Design umzusetzen, beispielsweise leuchtende Luftleitrippen auf eine nicht leuchtende Oberfläche des Grundkörpers zu setzen oder umgekehrt. Weitere Teile des Grundkörpers können dann ebenfalls mit teiltransparentem oder intransparentem Material überdruckt werden, um diese Teile je nach Designwunsch bei aktiver Beleuchtungseinrichtung entweder zu beleuchten oder eben auch nicht.

Ein weiteres Merkmal des erfindungsgemäßen Luftleitelements ist es, dass der Kern aus zwei im spitzen Winkel zusammenlaufenden Schenkeln ausgebildet ist, zwischen welchen ein Hohlraum bzw. eine Kavität ausgebildet ist, wobei die Beleuchtungseinrichtung Licht von der der Spitze abgewandten Seite aus in die Schenkel und/oder den Hohlraum eingekoppelt. Der Aufbau kann also beispielsweise in der Art eines umgekehrten V ausgebildet sein. Dabei kann die zentrale Achse dieses V gerade oder auch schräg verlaufen oder gebogen sein. Zwischen den beiden sich ausbildenden Schenkeln des transparenten Materials des Kerns, welche an ihrem einen Ende verbunden sind, ergibt sich dabei ein Hohlraum. Dieser sorgt bei einer Lichteinkopplung in die dem verbundenen Teil, welches auch als Spitze bezeichnet werden könnte, der Schenkel abgewandte Seite dafür, dass das eingekoppelte Licht großflächig in den Bereich der Schenkel gelangt und von diesen Schenkeln effizient in den Bereichen abgestrahlt wird, in denen der Kern mit dem teiltransparenten Material bedruckt ist.

Eine außerordentlich günstige Weiterbildung des erfindungsgemäßen Luftleitelements sieht es dabei vor, dass das auf den transparenten Kern aufgebrachte intransparente Material oder teiltransparente Material oder auch beide eingefärbt sind. Somit lässt sich durch eine Farbgestaltung das Design noch weiter optimieren, beispielsweise indem einzelne Flächen in einer im Beleuchtungsfall transparent durchscheinenden Farbe realisiert sind und andere Flächen intransparent mit einer direkten Einfärbung, ohne dass hier im beleuchteten Zustand Licht durchdringt.

Eine außerordentlich günstige Gestaltung des erfindungsgemäßen Luftleitelements sieht es vor, dass die Luftleitrippen aus dem intransparenten Material gedruckt sind. Diese sind also für das Licht nicht durchlässig und können beispielsweise aus schwarz eingefärbtem Material realisiert werden. Eine weitere sehr vorteilhafte und insbesondere mit dieser Ausgestaltung kombinierbare Idee sieht es dann ferner vor, dass die zwischen den Lichtleitrippen liegenden Oberflächen des Grundkörpers aus dem teiltransparenten Material gedruckt sind. Diese können beispielsweise aus dem teiltransparenten Material in einer Kontrastfarbe, beispielsweise in Weiß gedruckt sein. Wird die Beleuchtungseinrichtung eingeschaltet und koppelt Licht in den transparenten Kern ein, dann kann das Licht im Bereich dieser zwischen den Luftleitrippen liegenden Oberflächen abgestrahlt werden, sodass diese Flächen beleuchtet sind, während gemäß der zuvor beschriebenen vorteilhaften Ausgestaltung die Luftleitrippen selbst insbesondere unbeleuchtet bleiben und damit lediglich indirekt über die zwischen ihnen liegenden Oberflächen angeleuchtet werden.

Eine weitere sehr vorteilhafte Ausgestaltung, welche wiederum mit den beiden zuletzt beschriebenen Ausgestaltungen kombiniert werden kann, aber nicht muss, sieht es vor, dass alle nicht zwischen den Luftleitrippen liegenden Oberflächen des Grundkörpers mit dem intransparenten Material gedruckt sind. Damit wird also erreicht, dass insbesondere in Kombination mit der zuvor beschriebenen Ausgestaltung, dass eine Beleuchtung lediglich im Bereich zwischen den einzelnen Luftleitrippen gegeben ist und nicht in einem diese umgebenden Bereich, beispielsweise einem sie zusammenfassenden äußeren und/oder inneren Ringsegment oder dergleichen.

Gemäß einer weiteren sehr günstigen Ausgestaltung des erfindungsgemäßen Luftleitelements kann es dann ferner vorgesehen sein, dass der Grundkörper mit den Luftleitrippen an seiner Oberfläche, und hier insbesondere an seiner später einem Fahrzeuginnenraum zugewandten Oberfläche, mit einer lichtdurchlässigen Metallschicht bedampft ist. Eine solche Metallschicht kann beispielsweise eine dünne Aluminiumschicht sein, welche auf den Grundkörper und die Luftleitrippen aufgedampft wird. Damit entsteht die Optik eines verchromten Bauteils, welches in nicht eingeschaltetem Zustand der Beleuchtungseinrichtungen in der Art eines verchromten Luftleitelements bzw. Luftleitrings erscheint. Wird die Beleuchtungseinrichtung aktiviert, dann scheint in den Bereichen, in denen der Grundkörper und/oder die Luftleitrippen mit teiltransparentem Material bedruckt sind, die Beleuchtung durch. Damit lässt sich sowohl ein sehr ansprechendes Tagdesign ohne aktivierte Beleuchtungseinrichtung als auch ein sehr ansprechendes Nachtdesign mit aktivierter Beleuchtungseinrichtung schaffen.

Eine weitere sehr vorteilhafte Weiterbildung des erfindungsgemäßen Luftleitelements kann es, wie es bereits erwähnt worden ist, vorsehen, dass dieses als Luftleitring ausgebildet ist.

Eine vorteilhafte Weiterbildung des Luftleitelements bzw. Luftleitrings sieht es dann ferner vor, dass die Beleuchtungseinrichtung als LED-Ring ausgebildet ist. Diese Ausgestaltung über LEDs, insbesondere in Form eines LED-Rings, vorzugsweise bei der ringförmigen Ausgestaltung des Luftleitelements als Luftleitring, ermöglicht eine sehr einfache und effiziente Beleuchtung. Die Beleuchtungseinrichtung selbst ist dabei Teil des Luftleitelements und bewegt sich dementsprechend mit dieser, sodass keinerlei bewegliche Übertragung von Licht von dem einen Lichtleiter in den anderen Lichtleiter notwendig ist, sondern dass die Beleuchtungseinrichtung fest mit dem Grundkörper verbunden werden kann, um das Licht der oben schon besprochenen Art und Weise einzukoppeln. Die Beleuchtungseinrichtung bewegt sich dann mit dem Luftleitelement, sodass lediglich eine flexible elektrische Leistungsversorgung der Beleuchtungseinrichtung notwendig ist.

Die Beleuchtung über lichtemittierende Dioden hat dabei den zusätzlichen Vorteil, dass sie sehr energiesparend ist, sehr klein bezüglich des Bauraums realisiert werden kann, und dass verschiedene Lichtfarben relativ einfach zu realisieren sind. So ergibt sich beispielsweise die Möglichkeit, verschiedene Lichtfarben über die Beleuchtungseinrichtung umzusetzen. Hierdurch lässt sich das Design des Luftleitelements und hier insbesondere die Farbe seiner Beleuchtung in ein Farbkonzept einer ambienten Innenraumbeleuchtung des Fahrzeugs integrieren. Ergänzend oder alternativ dazu sind funktionale Anzeigen möglich, beispielsweise ein Rotton, wenn Heizluft aus der Belüftungsdüse strömt oder ein Blauton, wenn Kühlluft aus der Belüftungsdüse strömt.

Alternativ dazu lässt sich auch eine einzelne Lichtfarbe realisieren, welche beispielsweise ergänzt durch die Einfärbung des teiltransparenten Materials die gewünschte Lichtfarbe in den Innenraum als statische Beleuchtungsfarbe abgibt.

Eine Beleuchtungsdüse für ein Kraftfahrzeug mit einem solchen Luftleitelement kann es nun vorsehen, dass dieses als Luftleitring ausgebildet ist und die Belüftungsdüse in Richtung eines Fahrzeuginnenraums abschließt. Das Luftleitelement bzw. der Luftleitring bildet also den Abschluss der Belüftungsdüse auf der dem Fahrzeuginnenraum zugewandten Seite, sodass hier das Design, welches bei dem erfindungsgemäßen Aufbau des Luftleitelements über weite Strecken sehr flexibel angepasst werden kann, voll zur Geltung kommt.

Das Luftleitelement selbst kann dabei sehr kostengünstig als einteiliges Bauteil gedruckt werden. Der Mehrkomponentendruck aus verschiedenen transparenten, teiltransparenten, intransparenten und/oder eingefärbten Materialien erlaubt ein außerordentlich differenzierbares und flexibles Design. Insbesondere die Luftleitrippen können dabei eingefärbte teiltransparente und beleuchtete sowie eingefärbte intransparente Bereiche enthalten, um so über die Luftleitrippen und/oder die zwischen ihnen liegenden Flächen das Design sowohl im beleuchteten als auch im nicht beleuchteten Zustand flexibel anpassen zu können.

Weitere vorteilhafte Ausgestaltungen des erfindungsgemäßen Luftleitelements sowie der Belüftungsdüse ergeben sich auch aus dem Ausführungsbeispiel, welches nachfolgend unter Bezugnahme auf die Figuren näher dargestellt ist.

Dabei zeigen:
- Fig. 1: eine Draufsicht auf eine mögliche Ausführungsform des Luftleitelements in Form eines Luftleitrings;
- Fig. 2: eine schematische Schnittdarstellung gemäß der Linie II-II in Fig. 1; und
- Fig. 3: eine beispielhafte Belüftungsdüse mit dem Luftleitelement gemäß Fig. 1.

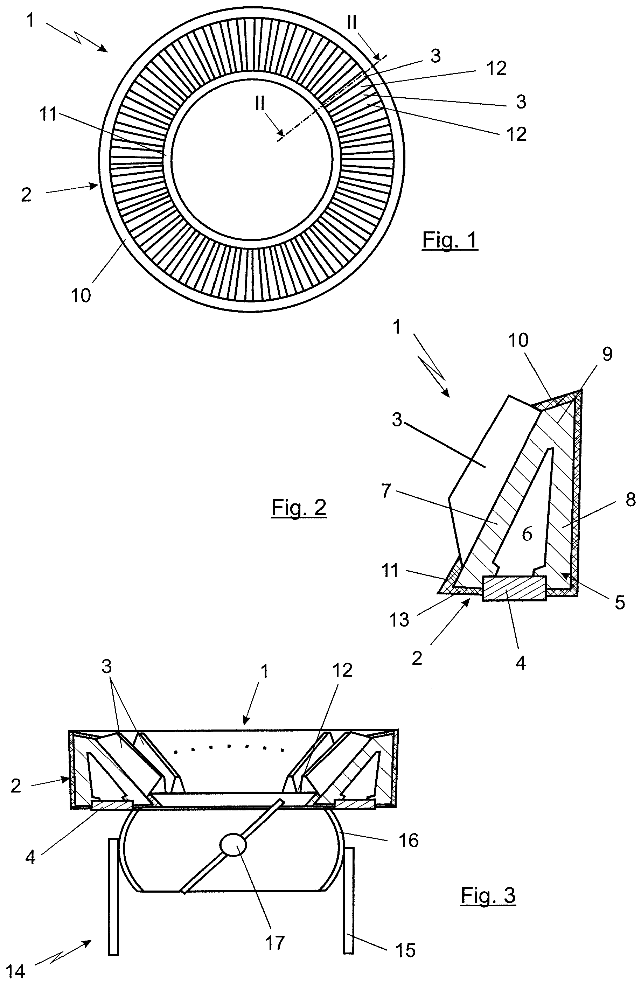

In der Darstellung der Figur 1 ist die Draufsicht auf ein Luftleitelement 1 in Form eines Luftleitrings 1 dargestellt. Dieser besteht im Wesentlichen aus einem im Querschnitt der Figur 2 erkennbaren Grundkörper mit einer um den Umfang verteilten Anzahl von Luftleitrippen 3 sowie einer Beleuchtungseinrichtung 4, welche insbesondere als LED-Ring ausgebildet ist. Der Grundkörper 2 samt der Luftleitrippen 3 ist nun als einteiliges Bauteil im 3D-Mehrkomponentendruck aus verschiedenen Materialien hergestellt.

Der Grundkörper 2 selbst umfasst einen Kern 5 aus einem transparenten Material, welches eine Kavität 6 bzw. einen Hohlraum 6 zwischen zwei Schenkeln 7, 8 einschließt. Diese beiden Schenkel 7, 8 sind im Bereich einer mit 9 bezeichneten Spitze miteinander verbunden. Diese Spitze ist dabei in dem erfindungsgemäßen Aufbau so ausgeführt, dass die beiden Schenkel 7, 8 in dem Kern 5 einteilig zusammenlaufen. Sie muss dabei nicht zwingend spitz ausgeführt sein, sondern kann, wie es in der Schnittdarstellung der Figur 2 erkennbar ist, einen in der Draufsicht gemäß Figur 1 ringförmigen Bereich 10 umfassen, welcher als äußeres Ringsegment des Luftleitrings 1 bezeichnet werden kann. Zwischen diesem äußeren Ringsegment 10 und einem inneren Ringsegment 11 erstrecken sich dabei die mit 3 bezeichneten Luftleitrippen und zwischen ihnen, wie es wiederum in der Darstellung der Figur 1 zu erkennen ist, jeweils mit 12 bezeichnete Zwischenräume.

Von den Luftleitrippen 3 und den Zwischenräumen 12 zwischen diesen Luftleitrippen 3 sind dabei in der Darstellung der Figur 1 nur einige wenige mit einem Bezugszeichen versehen. Der Aufbau aus abwechselnden Luftleitrippen 3 und Zwischenräumen 12 setzt sich in der Praxis jedoch über den gesamten Umfang des Luftleitelements 1 fort, wie es in der Figur 1 dargestellt ist. Die Kavität 6 wirkt nun so mit der Beleuchtungseinrichtung 4 zusammen, dass Licht in die beiden Schenkel 7, 8 des Kerns 5 und/oder in die Kavität 6 eingekoppelt wird. Hierdurch wird eine ideale Lichtverteilung erreicht, da durch die in dem Kern 5 angeordnete Kavität 6 die Lichtabsorption innerhalb des Kerns 5 deutlich reduziert und damit die Beleuchtung verbessert wird.

Der bereits angesprochene 3D-Mehrkomponentendruck, welcher zur einteiligen Herstellung des Grundkörpers 2 samt seiner Luftleitrippen 3 eingesetzt wird, setzt nun verschiedene Materialien bzw. Komponenten ein. Im Bereich des Kerns 5 ist dies ein transparentes Material, sodass der Kern 5 das Licht der Beleuchtungseinrichtung 4 gleichmäßig über den gesamten Umfang und die gesamte Oberfläche des Grundkörpers 2 verteilt. Dieser würde nun überall leuchten, da das Licht an allen Oberflächen gleichmäßig abgestrahlt wird. Um dies zu verhindern, ist nun abschnittsweise eine Schicht aus intransparentem Material auf den Kern 5 aufgedruckt. In der Darstellung der Figur 2 ist dieses intransparente Material mit 13 bezeichnet. Es umgibt einen großen Teil des Kerns 5 und ist in der Darstellung der Figur 2 kreuzschraffiert dargestellt. Dieses Material kann beispielsweise aus einem schwarz eingefärbten intransparenten Kunststoff bestehen, welcher auf das transparente Material des Kerns 5 aufgedruckt wird. Aus demselben intransparenten Material können nun die Luftleitrippen 3 ganz oder zumindest teilweise realisiert werden. In dem hier dargestellten Ausführungsbeispiel sollen sie gänzlich aus diesem intransparenten Material bestehen.

Die im Bereich der in Figur 1 erkennbaren Zwischenräume 12, welche sowohl zwischen den einzelnen Luftleitrippen 3 als auch zwischen den beiden Ringsegmenten 10, 11 liegen, welche ja alle mit intransparentem Material auf den Kern 5 aufgedruckt sind, können nun transparente oder teiltransparente Materialien zum Einsatz kommen. Insbesondere sollen weiß eingefärbte teiltransparente Materialien im Bereich der Zwischenräume 12 auf den Kern 5 aufgedruckt werden. Das Design des Luftleitelements 1 besteht dann aus einem abwechselnden Schwarz-Weiß-Bild im Bereich der Zwischenräume 12 und Luftleitrippen 3 sowie zwei schwarzen diese umgebenden Ringsegmenten 10, 11. Für den Fall der Beleuchtung können über die Beleuchtungseinrichtung 4 diese Zwischenräume 12 nun beleuchtet werden. Je nach eingekoppelter Lichtfarbe der Beleuchtungseinrichtung 4 entsteht so das gewünschte Design. Im Tagdesign, also bei abgeschaltetem Licht wird im Gegensatz zum Nachtdesign die Farbe der intransparenten und transparenten Materialien zur Wirkung kommen.

Zusätzlich zu der beschriebenen Farbgebung ist es nun möglich, die gesamte Oberfläche des Grundkörpers 2 samt seiner Luftleitrippen 3 mit einer lichtdurchlässigen Metallschicht zu versehen. Eine solche Metallschicht kann beispielsweise eine aufgedampfte Aluminiumschicht sein. Sie sorgt dann bei abgeschalteter Beleuchtung, also im Tagdesign, für eine verchromte Anmutung des Luftleitrings 1. Wird dahingegen die Beleuchtung eingeschaltet, dann scheinen die Zwischenräume 12 hell durch die metallische Beschichtung durch im Bereich der Luftleitrippen 3 und der Ringsegmente 10, 11 kommt dann im Wesentlichen das dunkle hinter der metallischen Schicht liegende Material zur Geltung, sodass ein verchromtes Tagdesign mit einem beleuchteten Nachtdesign einfach kombiniert werden kann.

Der gesamte Aufbau, welcher hinsichtlich seiner Formgebung hier nur schematisch angedeutet ist, lässt sich dabei auf verschiedene Art und Weise realisieren. So könnte beispielsweise eine Mittelachse, welche zentral in der Kavität 6 von unten nach oben verläuft, mit einem größeren Winkel gegenüber der Horizontalen in der Darstellung der Figur 2 geneigt sein, als es hier dargestellt ist. Anstelle einer Gerade könnte hier auch eine beliebige Kurve oder dergleichen zum Einsatz kommen, der Kern 5 könnte also beispielsweise gebogen realisiert werden.

In der Darstellung der Figur 3 ist der Luftleitring 1 nochmals in einer schematischen Schnittdarstellung analog zu der in Fig. 2 dargestellt, jedoch mit einem Schnitt über den gesamten Durchmesser. Die einzelnen Luftleitrippen 3 sind hier nicht alle explizit dargestellt, sondern es sind lediglich einzelne dieser Luftleitrippen 3 sowie der dazwischen angeordneten Zwischenräume 12 angedeutet. Der Luftleitring 1 ist nun auf eine Belüftungsdüse 14 aufgesetzt, welche in an sich bekannter Art und Weise aus einem Gehäuse bzw. Rohr 15 besteht, in welchem ein kugelkalottenförmiges Element 16 beweglich angeordnet ist, um durch ein Verstellen desselben den über die Belüftungsdüse 14 abgegebenen Luftstrom in eine gewünschte Richtung zu lenken. Ferner kann eine Einrichtung zur Regulierung der Durchströmung vorgesehen sein, welche hier in der Art einer Drosselklappe 17 schematisch angedeutet ist. Auf dieses bewegliche Element 16 ist nun der Luftleitring 1 samt seiner Beleuchtungseinrichtung 4 aufgebracht. Somit besteht die Möglichkeit, über den Luftleitring 1 und seine Luftleitrippen 3 die durch die Einstellung des beweglichen Elements 16 gewünschte Richtung in einem Luftstrom zu erzeugen und diesen über die Luftleitrippen 3 gut zu leiten, sodass dieser in der gewünschten Art und Weise durch den Fahrzeuginnenraum strömt und so beispielsweise eine Person, wie gewünscht, wärmt oder kühlt. Der Luftleitring 1 bildet dabei den vorzugsweise ringförmigen Abschluss der Belüftungsdüse 14 gegenüber dem Fahrzeuginnenraum, welcher dementsprechend in der Figur 3 oberhalb der Darstellung läge. Anstelle eines Rings sind selbstverständlich andere Formgebungen denkbar, beispielsweise ein Oval, ein Rechteck, ein Quadrat, ein Achteck, ein Sechseck oder auch eine unregelmäßige Formgebung, welche beispielsweise auch nur einen Teil des Umfangs, des Rohrs 15 bzw. des Elements 16 umfassen kann.

## Patentansprüche

1. Luftleitelement (1) für eine Belüftungsdüse (14) in einem Kraftfahrzeug, mit einem
Grundkörper (2), der den Querschnitt der Belüftungsdüse (14) zumindest teilweise umfassen kann, auf welchem Luftleitrippen (3) angeordnet sind, sowie mit einer Beleuchtungseinrichtung (4),
**dadurch gekennzeichnet, dass**
der Grundkörper (2) und die Luftleitrippen (3) einteilig mittels 3D-Mehrkomponentendruck hergestellt sind, wobei der Grundkörper (2) einen transparenten Kern (5) aufweist, wobei Teile der Oberfläche des Grundkörpers (2) und der Luftleitrippen (3) zumindest abschnittsweise aus einem teiltransparenten Material und zumindest abschnittsweise aus einem intransparenten Material (13) auf den Kern (5) aufgedruckt sind, und wobei der Kern (5) im Querschnitt gesehen aus zwei im spitzen Winkel zusammenlaufenden Schenkeln (7, 8) ausgebildet ist, zwischen welchen eine Kavität (6) ausgebildet ist, wobei die Beleuchtungseinrichtung (4) Licht von der dem spitzen Winkel abgewandten Seite in die Schenkel (7, 8) und/oder die Kavität (6) einkoppelt.

2. Luftleitelement nach Anspruch 1,
**dadurch gekennzeichnet, dass**
das auf den transparenten Kern (5) aufgedruckte intransparente Material (13) und/oder teiltransparente Material eingefärbt sind.

3. Luftleitelement (1) nach Anspruch 1, oder 2,
**dadurch gekennzeichnet, dass**
die Luftleitrippen (3) aus dem intransparenten Material (13) gedruckt sind.

4. Luftleitelement (1) nach einem der Ansprüche 1 bis 3,
**dadurch gekennzeichnet, dass**
die zwischen den Luftleitrippen (3) liegenden Oberflächen (12) des Grundkörpers (2) aus dem teiltransparenten Material gedruckt sind.

5. Luftleitelement (1) nach einem der Ansprüche 1 bis 4,
**dadurch gekennzeichnet, dass**
alle nicht zwischen den Luftleitrippen (3) liegenden Oberflächen des Grundkörpers (2) mit dem intransparenten Material (13) gedruckt sind.

6. Luftleitelement (1) nach einem der Ansprüche 1 bis 5,
**dadurch gekennzeichnet, dass**
der Grundkörper (2) mit den Luftleitrippen (3) an zumindest einem Teil seiner Oberfläche mit einer lichtdurchlässigen Metallschicht bedampft ist.

7. Luftleitelement (1) nach einem der Ansprüche 1 bis 6,
**dadurch gekennzeichnet, dass**
der Grundkörper (2) ringförmig ausgebildet ist.

8. Luftleitelement (1) nach einem der Ansprüche 1 bis 7,
**dadurch gekennzeichnet, dass**
die Beleuchtungseinrichtung (4) als LED-Anordnung mit einer dem Grundkörper (2) korrespondierenden Form ausgebildet ist.

9. Belüftungsdüse (14) für ein Kraftfahrzeug mit einem als Luftleitring (1) ausgebildeten Luftleitelement (1) gemäß einem der Ansprüche 1 bis 8, welches die Belüftungsdüse (14) in Richtung eines Fahrzeuginnenraums abschließt.

## Claims

1. Air guiding element (1) for a ventilation nozzle (14) in a motor vehicle, comprising a main body (2) which can at least partly encompass the cross-section of the ventilation nozzle (14) and on which air guiding ribs (3) are arranged, and comprising a lighting device (4),
**characterized in that**
the main body (2) and the air guiding ribs (3) are produced in one piece by means of 3D multicomponent printing, the main body (2) having a transparent core (5), parts of the surface of the main body (2) and of the air guiding ribs (3) being printed onto the core (5), at least some from a partially transparent material and at least some from a nontransparent material (13), and the core (5), seen in cross-section, being formed from two legs (7, 8) converging at an acute angle, between which a cavity (6) is formed, the lighting device (4) coupling light from the side facing away from the acute angle into the legs (7, 8) and/or the cavity (6).

2. Air guiding element according to claim 1,
**characterized in that**
the nontransparent material (13) and/or partially transparent material printed onto the transparent core (5) are colored.

3. Air guiding element (1) according to either claim 1 or claim 2,
**characterized in that**
the air guiding ribs (3) are printed from the nontransparent material (13).

4. Air guiding element (1) according to any of claims 1 to 3,
**characterized in that**
the surfaces (12) of the main body (2) lying between the air guiding ribs (3) are printed from the partially transparent material.

5. Air guiding element (1) according to any of claims 1 to 4,
**characterized in that**
all surfaces of the main body (2) not lying between the air guiding ribs (3) are printed with the nontransparent material (13).

6. Air guiding element (1) according to any of claims 1 to 5,
**characterized in that**
the main body (2) having the air guiding ribs (3) is coated with a translucent metal layer on at least part of its surface.

7. Air guiding element (1) according to any of claims 1 to 6,
**characterized in that**
the main body (2) is ring-shaped.

8. Air guiding element (1) according to any of claims 1 to 7,
**characterized in that**
the lighting device (4) is designed as an LED arrangement having a shape corresponding to the main body (2).

9. Ventilation nozzle (14) for a motor vehicle having an air guiding element (1) designed as an air guiding ring (1) according to any of claims 1 to 8, which closes off the ventilation nozzle (14) in the direction of a vehicle interior.

## Revendications

1. Élément de guidage d'air (1) pour une buse d'aération (14) dans un véhicule automobile, comportant un corps de base (2) qui peut entourer au moins partiellement la section transversale de la buse d'aération (14) et sur lequel sont disposées des ailettes de guidage d'air (3), et comportant un dispositif d'éclairage (4),
**caractérisé en ce que**
le corps de base (2) et les ailettes de guidage d'air (3) sont fabriqués d'une seule pièce au moyen d'une impression 3D à plusieurs composants, dans lequel le corps de base (2) présente un noyau (5) transparent, dans lequel des parties de la surface du corps de base (2) et des ailettes de guidage d'air (3) sont imprimées sur le noyau (5) en un matériau partiellement transparent au moins dans certaines sections et en un matériau non transparent (13) au moins dans certaines sections, et dans lequel le noyau (5), vu en coupe transversale, est formé de deux branches (7, 8) qui se rejoignent en formant un angle aigu et entre lesquelles est formée une cavité (6), dans lequel le dispositif d'éclairage (4) injecte de la lumière dans les branches (7, 8) et/ou dans la cavité (6) à partir du côté opposé à l'angle aigu.

2. Élément de guidage d'air selon la revendication 1,
**caractérisé en ce que**
le matériau non transparent (13) et/ou le matériau partiellement transparent imprimés sur le noyau (5) transparent sont colorés.

3. Élément de guidage d'air (1) selon la revendication 1 ou 2,
**caractérisé en ce que**
les ailettes de guidage d'air (3) sont imprimées à partir du matériau non transparent (13).

4. Élément de guidage d'air (1) selon l'une des revendications 1 à 3,
**caractérisé en ce que**
les surfaces (12) du corps de base (2) situées entre les ailettes de guidage d'air (3) sont imprimées avec le matériau partiellement transparent.

5. Élément de guidage d'air (1) selon l'une des revendications 1 à 4,
**caractérisé en ce que**
toutes les surfaces du corps de base (2) qui ne sont pas situées entre les ailettes de guidage d'air (3) sont imprimées avec le matériau non transparent (13).

6. Élément de guidage d'air (1) selon l'une des revendications 1 à 5,
**caractérisé en ce que**
une couche métallique translucide est vaporisée sur le corps de base (2) comportant les ailettes de guidage d'air (3) sur au moins une partie de sa surface.

7. Élément de guidage d'air (1) selon l'une des revendications 1 à 6,
**caractérisé en ce que**
le corps de base (2) est de forme annulaire.

8. Élément de guidage d'air (1) selon l'une des revendications 1 à 7,
**caractérisé en ce que**
le dispositif d'éclairage (4) est formé en tant qu'agencement de DEL avec une forme correspondant à celle du corps de base (2).

9. Buse d'aération (14) pour un véhicule automobile, comportant un élément de guidage d'air (1) selon l'une des revendications 1 à 8 formé en tant qu'anneau de guidage d'air (1) qui ferme la buse d'aération (14) en direction d'un habitacle de véhicule.
